(19) Europäisches Patentamt
European Patent Office
Office européen des brevets

(11) Publication number: **0 344 845 B1**

(12) **EUROPEAN PATENT SPECIFICATION**

(45) Date of publication of patent specification :
13.11.91 Bulletin 91/46

(51) Int. Cl.⁵ : **A01J 25/13**

(21) Application number : **89201342.6**

(22) Date of filing : **26.05.89**

(54) Cheese vat part and method for manufacturing it.

(30) Priority : **30.05.88 NL 8801381**

(43) Date of publication of application :
**06.12.89 Bulletin 89/49**

(45) Publication of the grant of the patent :
**13.11.91 Bulletin 91/46**

(84) Designated Contracting States :
**BE DE ES FR IT NL SE**

(56) References cited :
**EP-A- 0 034 861**
**NL-A- 7 302 524**
**NL-C- 173 126**

(73) Proprietor : **AREND B.V.**
**Heembadweg 3**
**NL-9561 CZ Ter Apel (NL)**

(72) Inventor : **Dijkhuizen, Gezinus Henderikus Alko**
**Ruitenkamp 62**
**NL-9561 LG Ter Apel (NL)**

(74) Representative : **de Wit, Gerard Frederik, Ir. et al**
**Breitnerlaan 146**
**NL-2596 HG Den Haag (NL)**

EP 0 344 845 B1

## Description

The invention relates to a cheese vat part of plastic material with an inner surface, of which at least a portion has recesses and is provided with perforations.

Such a cheese vat part, which may be a cheese vat, a follower or a plate for manufacturing a square cheese, is among other known from the European Patent Specification EP-B-0034861 which discloses the features of the preamble of claim 1.

This document also discloses the features of the preamble of the method claims.

With this known technic draining of the whey occurs by enhancing the whey transport to the grooves by means of scrutches in the surface.

Herewith an improvement is obtained of the whey drain and also of a good rind forming. Moreover in practice the outlook and smoothness of cheese, made with a suchlike cheese vat was highly satifactory.

The invention aims to provide a further improvement in the sense that the uniformity of the liquid drain and the quality of the obtained rind are improved still further, which also means that a suchlike cheese vat part is suitable for making more types of cheese.

A further problem forms the readiness with which a cheese vat part can be cleaned after use. Liquid soil can easily be washed off, but solid cheese and curd particles must also be removed with certainty. Also in this respect the invention aims to provide an improvement.

According to the invention the above aims are obtained by providing that at least part of the recesses are knife cuts.

It has appeared that knife cuts have the property to be and to remain permeable for moisture, but that solid cheese or curd particles will not penetrate into them. Moreover the knife cuts are so narrow, that they do not contribute to the roughness of the rind surface of the cheese.

According to a further elaboration of the invention it is provided that the knife cuts are arranged in one or more patterns of mutual parallel lines. Herewith it is attained that a regular pattern or combination of patterns is present by reason of which the liquid drain is highly uniform.

From the cited European Patent Specification EP-B-0034861 it is already known to apply grooves which cooperate with finer recesses in the surface. This idea is also useful when applied to the invention, wherewith a further part of the recesses are formed by grooves crossing the knife cuts, the knife cuts being preferably somewhat deeper than the grooves.

In case the knife cuts are deeper than the grooves a free liquid flow between the knife cuts and the grooves is possible, because solid particles may penetrate into the grooves, but will not enter the knife cuts, as practice has shown. Then from a hygenical view point the situation is realized, that the knife cuts remain free of solid particles and the grooves will let them go easily.

With the invention it is preferably provided that the perforations are located in the knife cuts and/or the grooves and/or the cross points of grooves and knife cuts.

Favourable results have been obtained when it is provided that two patterns of mutual parallel knife cuts are present, the knife cuts of different patterns crossing each other at the grooves.

With respect to the depth of the knife cuts it is remarked, that this is not critic, but that a depth of 0,5 to 1,6 mm and especially from about 1,2 to 1,3 mm have yielded good cheese surfaces. Therewith the knife cuts preferably have a width at their lower side of practically zero and at their upper side of about 0,1 mm. In this connection it is remarked that a knife cut in plastic material springs back somewhat after removal of the knife, but that nevertheless some gap remains. Herewith it is pointed out that a knife cut does not remove material, but that with application of the grooves (as far as this is not done by moulding) material is actually removed. Favourable results have been attained when the grooves have a distance centre to centre of 1,0 to 2,0 mm and a depth of also 1,0 to 2,0 mm. Therewith the grooves may contact each other, but it is also possible that narrow plane strips are present between the grooves.

The invention also encompasses a method for manufacturing a cheese vat part, which is characterized in that with a tapered thin knife a pattern of knife cuts is cut in the surface of plastic cheese vat part, said knife having preferably a thickness of 0,2 to 0,6 mm at the level it engages the surface of the cheese vat part.

Therewith the shape of the knife in the cutting direction is less important and it may be round, obliquely tilting forward or backward with respect to the surface to be cut or perpendicular to it.

An embodiment of the inventive method which is especially suitable for cylindrical or partially spherical cheese vats consists in that the cheese vat part is axially symmetric and the knife cut is applied in the form of a helix or a spiral. This can be done by mounting the cheese vat in a lathe and to move the knife with respect to the rotating cheese vat in such a way that a spiral configuration is generated varying from a helix in a cylinder to a plane spiral in a plane bottom portion of a vat.

When manufacturing an inventive cheese vat part it is possible to apply parallel adjacent grooves in a part of plastic material, which grooves have a cross-sectional shape of about an equilateral triangle, to apply the knife cuts, which cross the grooves and to remove a surface layer, so that plane strips between the grooves are formed and any raised edges of the cuts, however small they may have been, are removed. It has appeared that dependent on the cheese one wants to manufacture in this way a further variable is obtained to obtain a rind and a moist drain as good as possible.

The invention in the following is elucidated on hand of the drawing, in which :

Figure 1 shows a detail cross-section through a wall of a cheese vat part according to the invention ;

Figure 2 shows a partial view of a cheese vat part wall according to another embodiment of the invention ; and

Figure 3 shows a cross-section of a cheese vat with successively a cylindrical, an anular and a plane portion.

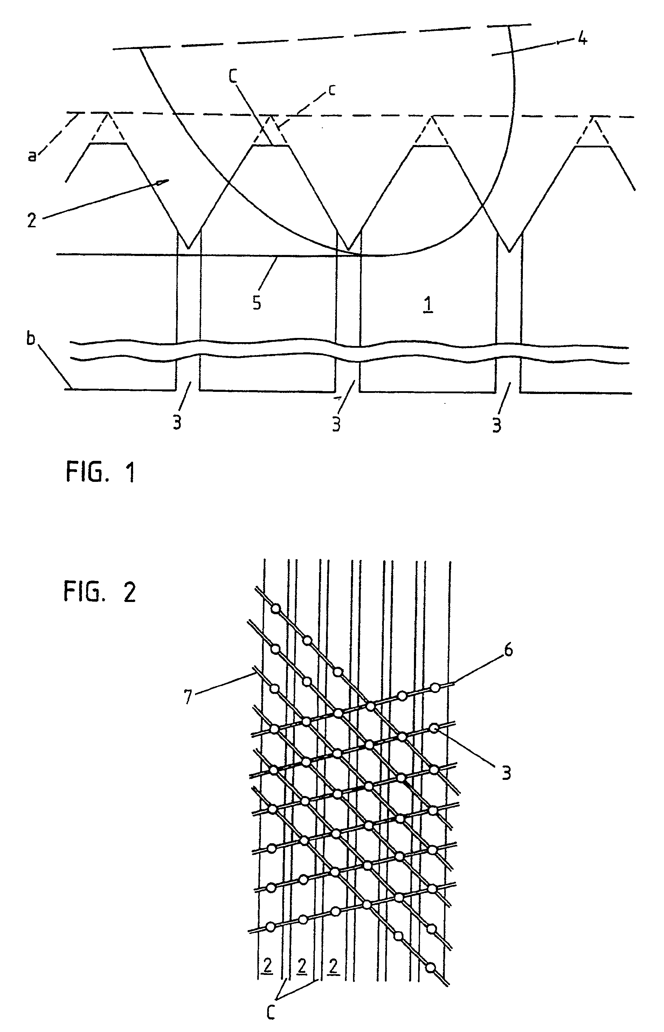

In figure 1 with 1 a wall is indicated which is shown in cross-section and originally has a thickness from the interrupted line a unto the outer surface b. At the side of the surface a grooves have been made with an equilaterally triangular section, a side having a length of for instance 1,4 mm. Further the grooves engage each other immediately, as indicated with the interrupted line c. The upper side has consequently after the application of the grooves and a surface layer removal a shape consisting of trapeziform ribs with triangular grooves 2 therebetween.

Perforations 3 connected to the outer wall b are connected to the bottom of the grooves. With 4 a round narrow knife has been indicated which at the level of the plane parts C between the grooves 2 has a thickness of for instance 0,2 mm. This knife cuts a knife cut, the lower side of which is indicated with line 5. Such a knife cut is made without removal of material and has a very smooth surface, which results in a liquid conductance towards the grooves 2 and/or the perforations 3, even after the plastic material of the wall 1 has elastically sprung back a little.

In the grooves 2 solid particles will be gathered under influence of the pressing pressure, but the drain between the knife cuts with their lower sides 5 and grooves 2 and perforations 3 respectively will not be clogged.

According to a preferred embodiment of the invention therewith the bottom 5 of the knife cut is located at a lower level than the bottom of the grooves. This ensures under all conditions a good liquid drain from the knife cut towards the grooves and from there to the perforations. The measure in which plane parts C between the grooves 2 are present may vary in dependence on the sort of cheese to be manufactured. Therewith it will be clear that a smoother cheese surface is obtained if the grooves are less deep, consequently if with the same original groove cross-section broader dams C have remained between the grooves.

In the embodiment of figure 1 the direction of the knife cuts is perpendicular to that of the grooves.

In figure 2 an embodiment has been shown, in which the knife cuts 6 and 7 have been applied in two patterns of parallel lines, the knife cut of these patterns crossing each other in the centre lines of the grooves 2 between the dams C.

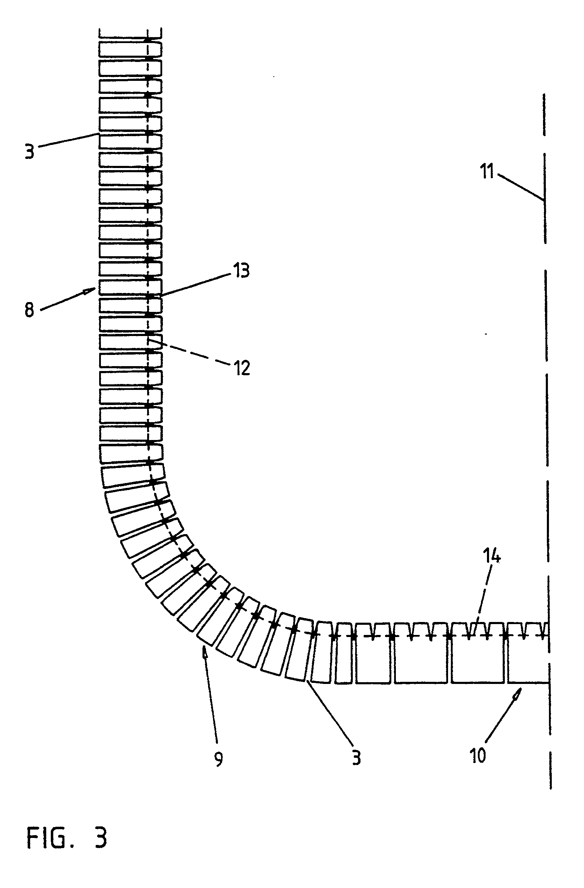

Further in figure 3 schematically a cross-section has been shown through a part of a cheese vat with a cylindrical portion 8, an annular portion 9 and a plan portion 10. This vat is axially symmetrical with respect to the axis 11. Here the knife cuts 13 have been applied in a helical or spiral form and are cut by having the vat rotate and moving the knife which makes the knife cut along a gradual traject always perpendicular to the vat's surface, preferably controlled by a computer, so that with rotation of the vat a spiral or helical shaped knife cut is formed.

Finally in the plane portion 10 a radial groove pattern has been applied, whereas the knife cut is spiral shaped.

With the interrupted line 14 the location of the bottom of the grooves has been indicated.

It is, however, also possible to have different knife cut patterns in different portions of the cheese vat part for instance spiral shaped in the portions 8 and 9 and a pattern of mutual parallel lines in the portion 10.

As has already been stated neither the shape nor the dimensions of the grooves or even their presence are essential for the invention. Very good results have been realized with grooves with a cross-section of an equilateral triangle, a small part of which had been removed and with knife cuts ending 0,1 mm lower than the grooves. This is, however, dependent on the sort of the cheese to be made.

It is remarked that for an easy discharge of the cheese from the vat the direction of the knife cuts in no way is a hindrance and that never cheese rind particles stick in the knife cuts.

The cross-section of the knife cuts will be somewhat narrower than that of the knife, due to springing back of the walls. The knife may have a cross-section of an ablong triangle, wherewith near the cutting edge one or both sides of the triangle has a bend. Also it is possible that the side walls of the knife are parallel with one or two narrow cutting planes near the cutting edge.

## Claims

1. Cheese vat part of plastic material with an inner surface of which at least a portion has recesses and is provided with perforations (3), characterized in that at least part of the recesses are knife cuts (6, 7).

2. Cheese vat part according to claim 1, characterized in that the knife cuts (6, 7) are arranged in one or more patterns of mutual parallel lines.

3. Cheese vat part according to claim 1 or 2, characterized in that a further part of the recesses are formed by grooves (2) crossing the knife cuts (6, 7), the knife cuts (6, 7) being preferably somewhat deeper than the grooves.

4. Cheese vat part according to any of the preceding claims, characterized in that the perforations (3) are located in the knife cuts (6, 7) and/or the grooves (2) and/or the cross points of grooves (2) and knife cuts (6, 7).

5. Cheese vat part according to claim 2 and 3 or 2, 3 and 4, characterized in that two patterns of mutual parallel knife cuts (6, 7) are present, the knife cuts of different patterns crossing each other at the grooves.

6. Cheese vat part according to any of the preceding claims, characterized in that the knife cuts (6, 7) have a depth of 0,5 to 1,6 mm, near their lower side are almost closed and at the level of the surface in which they have been cut a width of about 0,1 mm.

7. Cheese vat part according to any of the claims 3-6, characterized in that the distance centre to centre of the grooves (2) is 1,0 to 2,0 mm and their depth also 1,0 to 2,0 mm.

8. Cheese vat part according to any of the preceding claims 3-7, characterized in that between succeeding grooves (2) a narrow flat surface strip is present.

9. Method for manufacturing a cheese vat part according to any of the preceding claims, characterized in that with a tapered thin knife (4) a pattern of knife cuts (6, 7) is cut in the surface of plastic cheese vat part, said knife (4) having preferably a thickness of 0,2 to 0,6 mm at the level it engages the surface of the cheese vat part.

10. Method according to claim 9, characterized in that the cheese vat part is axially symmetric and the knife cut (13) is applied in the form of a helix or a spiral.

## Patentansprüche

1. Kunststoff Käseformteil mit einer inneren Oberfläche, wovon wenigstens ein Teil Einsparungen hat und mit Perforationen versehen ist, dadurch gekennzeichnet, dass wenigstens ein Teil der Einsparungen (3) Messerschnitte (6, 7) sind.

2. Käseformteil nach Anspruch 1, dadurch gekennzeichnet, dass die Messerschnitte (6, 7) in einem oder mehreren Muster von gegenseitig parallelen Linien angeordnet sind.

3. Käseformteil nach Anspruch 1 oder 2, dadurch gekennzeichnet, dass ein weiterer Teil der Einsparungen durch Rinnen (2), die die Messerschnitte (6, 7) schneiden, wobei die Messerschnitte (6, 7) vorzugsweise etwas tiefer als die Rinnen sind, gebildet werden.

4. Käseformteil nach einem oder mehreren der vorangehenden Ansprüche, dadurch gekennzeichnet, dass die Perforationen (3) in den Messerschnitten (6, 7) oder/aber in den Rinnen (2) oder/aber den Schnittpunkten der Rinnen (2) und Messerschnitte (6, 7) liegen.

5. Käseformteil nach Anspruch 2 und 3 oder 2, 3 und 4, dadurch gekennzeichnet, dass zwei Muster von gegenseitig parallelen Messerschnitten (6, 7) anwesend sind, wobei die Messerschnitte von verschiedenen Mustern einander in den Rinnen schneiden.

6. Käseformteil nach einem oder mehreren der vorangehenden Ansprüche, dadurch gekennzeichnet, dass die Messerschnitte (6, 7) eine Tiefe von 0,5 bis 1,6 mm haben, bei ihren Unterseiten fast geschlossen sind und in der Höhe der Oberfläche in der sie geschnitten sind eine Breite von etwa 0,1 mm haben.

7. Käseformteil nach einem oder mehreren der Ansprüche 3-6, dadurch gekennzeichnet, dass der Abstand zwischen den Mitten der Rinnen (2) 1,0 bis 2,0 mm und ihre Tiefe auch 1,0 bis 2,0 mm ist.

8. Käseformteil nach einem oder mehreren der Ansprüche 3-7, dadurch gekennzeichnet, dass zwischen aufeinander folgenden Rinnen (2) ein schmaler flachen Oberflächestreifen anwesend ist.

9. Verfahren zur Anfertigung einer Käseformteil nach einem der vorangehenden Ansprüche, dadurch gekennzeichnet, dass mit einem dünnen sich verschmälernden Messer (4) ein Muster von Messerschnitten (6, 7) in der Oberfläche eines kunststoff Käseformteil eingeschnitten wird, welches Messer (4) vorzugsweise eine Dicke von 0,2 bis 0.6 mm hat in der Höhe, wo es die Oberfläche des Käseformteils berührt.

10. Verfahren nach Anspruch 9, dadurch gekennzeichnet, dass der Käseformteil axial symmetrisch ist und dass der Messerschnitt (13) ub der Form einer Schraubelinie oder Spirale angebracht wird.

## Revendications

1. Partie d'un moule à fromage de matière plastique ayant une surface intérieure plus au moins une partie a des retranchements et a été prévue de perforations (3), caractérisé en ce que les retranchements au moins partiellement sont incisions à couteau (6, 7).

2. Partie d'un moule à fromage suivant la revendication 1, caractérisé en ce que les incisions à couteau (6, 7) sont arangées en un ou plusieurs patrons de ligne mutuellement parallèles.

3. Partie d'un moule à fromage suivant la revendication 1 ou 2, caractérisé en ce qu'une partie ultérieure des retranchements est formée par des rainures (2) croisant les incisions à couteau (6, 7), les incisions à couteau (6, 7) de préférence étant un peu plus profondes que les rainures.

4. Partie d'un moule à fromage suivant quelqu'une des revendications précédentes, caractérisé en ce que les perforations (3) sont localisées dans les incisions à couteau (6, 7) et/ou les rainures (2) et/ou les croisements des rainures (2) et les incisions à couteau (6, 7).

5. Partie d'un moule à fromage suivant les revendications 2 et 3 ou 2, 3 et 4, caractérisé en ce que patrons des incisions à couteau (6, 7) mutuellement paralles sont présent, les incisions à couteau de patrons différentes se croisant dans les rainures.

6. Partie d'un moule à fromage suivant quelqu'une des revendications précédentes, caractérisé en ce que les incisions à couteau (6, 7) ont une profondeur de 0,5 à 1,6 mm, près de leur côté inférieur sont à peu près fermés et à la hauteur de la surface dans laquelle elles ont été incisées une largeur de circa 0,1 mm.

7. Partie d'un moule à fromage suivant quelqu'une des revendications 3-6, caractérisé en ce que la distance de centre au centre des rainures (2) est 1,0 à 2,0 mm et leur profondeur aussi 1,0 à 2,0 mm.

8. Partie d'un moule à fromage suivant quelqu'une des revendications précédentes, caractérisé en ce qu'entre rainures (2) successives une bande étroite de surface plane est présente.

9. Procédé pour fabrication une partie d'un moule à fromage suivant quelqu'une des revendications précédentes, caractérisé en ce qu'un patron des incisions à couteau (6, 7) est incisé avec une couteau (4) mince et d'épaisseur diminuante dans la surface d'une partie de matière plastique d'un moule à fromage, ledit couteau (4) ayant de préférence une épaisseur de 0,2 à 0,6 mm au niveau ou il contacte la surface de la partie d'un moule à fromage.

10. Procédé suivant la revendication 9, caractérisé en ce que la partie d'un moule à fromage est axialement symmétrique et que l'incision (13) à couteau est appliquée dans la forme d'une hélix ou d'une spirale.

FIG. 1

FIG. 2

FIG. 3